# EUROPÄISCHE PATENTANMELDUNG

(11) **EP 3 604 578 A1**
(43) Veröffentlichungstag der Anmeldung: **05.02.2020**
(21) Anmeldenummer: 18186627.8
(22) Anmeldetag: 31.07.2018
(51) Int. Cl.: C22C 11/02, H01M 4/68, H01M 10/12

(54) **BLEILEGIERUNG, ELEKTRODE UND AKKUMULATOR**

(71) Anmelder: HOPPECKE Batterien GmbH & Co. KG., 59929 Brilon (DE)
(72) Erfinder: Cattaneo, Eduardo, 59929 Brilon (DE); Riegel, Bernhard, 59929 Brilon (DE)
(74) Vertreter: Rausch Wanischeck-Bergmann Brinkmann

(57) **Zusammenfassung**

Die Erfindung betrifft eine Bleilegierung, insbesondere Elektrodengitterlegierung, aufweisend Blei, 0,04 Gew.-% - 0,08 Gew.-% Calcium und 0,003 Gew.-% - 0,025 Gew.-% wenigstens eines Seltenerdmetalls, wobei das wenigstens eine Seltenerdmetall Yttrium ist.

Darüber hinaus betrifft die Erfindung die Verwendung der erfindungsgemäßen Bleilegierungen, eine Elektrode mit einem Elektrodengerüst, welches wenigstens teilweise aus wenigstens einer der erfindungsgemäßen Bleilegierungen gebildet ist, und einen Blei-Säure-Akkumulator mit einer erfindungsgemäßen Elektrode.

## Beschreibung

Die Erfindung betrifft Bleilegierungen aufweisend wenigstens ein Seltenerdmetall, Verwendungen für die erfindungsgemäßen Bleilegierungen, eine Elektrode aufweisend ein Elektrodengerüst wenigstens teilweise bestehend aus einer der erfindungsgemäßen Bleilegierungen sowie einen Blei-Säure-Akkumulator aufweisend eine erfindungsgemäße Elektrode.

Bleilegierungen als Material für Elektrodengerüste zum Einsatz in Blei-Säure-Akkumulatoren sind dem Grunde nach aus dem Stand der Technik bekannt. Elektroden weisen zumeist ein festes Elektrodengerüst auf, das der Aufnahme einer pastösen aktiven Elektrodenmasse dient. Das Elektrodengerüst ist dabei zumeist als Elektrodengitter ausgebildet. Aus dem Stand der Technik sind jedoch auch weitere Formen bekannt. Unabhängig von der letztendlichen Form der Elektrodengerüste spricht man mit Bezug auf die Bleilegierungen üblicherweise von Elektrodengitterlegierungen.

Bei der Wahl der Bleilegierung spielen verschiedene Faktoren eine Rolle. Zum einen ist es erforderlich, dass die Bleilegierung auf wirtschaftlich sinnvolle Weise zu Elektrodengerüsten verarbeitet werden kann. Ferner muss die Bleilegierung eine vergleichsweise gute mechanische Stabilität aufweisen, um sowohl ihr eigenes vergleichsweise hohes Gewicht und das Gewicht der Elektrodenmasse über die gesamte Lebensdauer des Akkumulators tragen zu können. Darüber hinaus ist das Elektrodengerüst bei bestimmungsgemäßem Einsatz in einem Blei-Säure-Akkumulator stets in Kontakt mit einem hochkorrosiven Elektrolyten einerseits und mit den korrosiven Bestandteilen der aktiven Elektrodenmasse andererseits. Die Bleilegierung muss daher neben den vorgenannten Eigenschaften ferner korrosionsbeständig sein.

In diesem Zusammenhang sind beispielsweise aus der US 2,860,969 A Blei-Calcium-Cer haltige Legierungen bekannt. Die Druckschrift ist mit der Überwindung der Nachteile von Blei-Antimon Legierungen als Elektrodengittermaterial befasst. Antimon wurde in Bleilegierungen ursprünglich dafür verwendet der Legierung mechanische Stabilität zu verleihen. Die konkret vorgeschlagene PbCaSnCe-haltige Legierung sieht als Ersatz für Antimon Calcium vor, um die notwendige mechanische Stabilität bereitzustellen und die Abscheidung von Antimon auf der negativen Platte aufgrund positiver Gitterkorrosion zu verhindern. Bekanntermaßen führt die Kontaminierung der negativen Aktivmasse durch Antimon zu erhöhtem Wasserlust durch Elektrolyse und Sulfatierung der negativen Platten.

Die Legierungskomponente Cer dient demgegenüber der Verbesserung der Korrosionseigenschaften durch Verfeinerung der Korngrößen. Gitter mit grobkörnigen Gefügen haben Stege und Rahmen bestehend aus wenigen Körnern. In diesem Fall dringt der Korrosionsangriff an Korngrenzen schnell tief in die Stegen bzw. Rahmen. Diese Art intergranularer Korrosion führt in der Regel zu frühzeitigem Gitterzerfall.

Elektrodengerüste aus vorgenannten Legierungen haben jedoch den Nachteil, dass sie während des bestimmungsgemäßen Betriebs zu Gitterwachstum neigen, was von einer Beeinträchtigung der positiven Gittermasseanbindung bis hin zu erheblichen Kapazitätsverlusten des Akkumulators führen kann. Das Phänomen des Gitterwachstums ist die Folge eines im Laufe der Zeit zunehmenden Mangels an Kriechfestigkeit der Gitterlegierungen. Dieser irreversible Verlust von mechanischer Festigkeit wird auch "Überalterung" bezeichnet. Unter diesen Bedingungen erzeugt die zunehmenden Dicke der Korrosionsschicht eine axiale Kraft, die zu einer erheblichen Dehnung der Gitterstege und Rahmen führt.

Der Erfindung liegt damit die komplexe technische **Aufgabe** zugrunde, eine Legierung bereitzustellen, die als Material für Elektrodengerüste geeignet ist, d.h. wirtschaftlich sinnvoll in der Industrieproduktion verarbeitbar, ausreichend mechanisch stabil und korrosionsbeständig und darüber hinaus eine wenigstens verminderte Neigung zu Gitterwachstum während des Betriebs in einem Blei-Säure-Akkumulator aufweist.

Zur **Lösung** der Aufgabe schlägt die Erfindung eine Bleilegierung vor, aufweisend Blei, 0,03 Gew.-% - 0,09 Gew.-% Calcium und 0,003 Gew.-% - 0,025 Gew.-% wenigstens eines Seltenerdmetalls, wobei das wenigstens eine Seltenerdmetall Yttrium ist.

Zu den "Seltenerdmetallen" im Sinne der Erfindung zählen dabei die Metalle der Gruppe der Lanthanoide sowie die Metalle der 3. Nebengruppe des Periodensystems Scandium und Yttrium. Eine "Bleilegierung" bezeichnet eine solche Legierungszusammensetzung, die zu einem überwiegenden Gewichtsanteil Blei aufweist. Dabei addieren sich die angegebenen potenziellen weiteren Legierungskomponenten mit dem überwiegenden Rest Blei zu 100 Gew.-%.

Die erfindungsgemäße Bleilegierungen zeichnet sich dabei durch die erfinderische Idee aus, dass sie die synergetische Wirkung einer Kombination aus Blei und Seltenerdmetall in der angegebenen Zusammensetzung ausnutzt, um zu einer Legierung zu gelangen, die im Vergleich zu den aus dem Stand der Technik bekannten Bleilegierungen ein vermindertes Gitterwachstum zeigt.

Es hat sich in diesem Zusammenhang überraschend gezeigt, dass sich durch die Wahl eines geeigneten Seltenerdmetalls als Legierungskomponente das Gitterwachstum einer calciumhaltigen Bleilegierung im bestimmungsgemäßen Einsatz verringern lässt. Es wurde gefunden, dass sich dieser Effekt bei calciumhaltigen Bleilegierungen wesentlich durch das Seltenerdmetall Yttrium erreichen lässt. Yttrium entfaltet in dieser speziellen Legierungszusammensetzung eine bislang unerkannte Doppelwirkung, indem es einerseits die Korrosionsbeständigkeit durch Korngrößenverfeinerung erhöht und andererseits die durch die Calcium-Komponente hervorgerufene Neigung zu Gitterwachstum inhibiert.

Erfindungsgemäß beträgt der Gewichtsanteil von Yttrium in der calciumhaltigen Bleilegierung 0,003 Gew.-% bis 0,025 Gew.-%. Vorzugsweise weist die Bleilegierung einen Gewichtsanteil von 0,005 Gew.-% bis 0,020 Gew.-% Yttrium auf. Besonders bevorzugt weist die Bleilegierung einen Gewichtsanteil von 0,010 Gew.-% bis 0,020 Gew.-% Yttrium auf. Es hat sich gezeigt, das Yttrium in dieser quantitativen Zusammensetzung besonders vorteilhafte Eigenschaften hinsichtlich Gitterwachstum und Korrosionsbeständigkeit aufweist.

Gemäß einer bevorzugten Ausgestaltung der Erfindung kann die calciumhaltige Bleilegierung weitere Seltenerdmetalle, insbesondere Lanthanoide oder Mischmetalle aus Lanthanoiden, aufweisen. Diese dienen zum einen der Verbesserung der Korrosionseigenschaften der Legierung. Darüber hinaus hat sich gezeigt, dass sie in Kombination mit Yttrium das Wachstum des Elektrodengerüsts bei bestimmungsgemäßer Verwendung weiter hemmen. Diesbezüglich hat sich insbesondere eine Kombination aus Yttrium und einem La-Ce Mischmetall als besonders wirksam erwiesen. Erfindungsgemäß beträgt der Gewichtsanteil des weiteren Seltenerdmetalls maximal 0,025 Gew.-%. Vorzugsweise beträgt er 0,003 Gew.-% bis 0,025 Gew.-%. Vorzugsweise beträgt der Gewichtsanteil des wenigstens einen Seltenerdmetalls 0,005 Gew.-% bis 0,020 Gew.-%. Besonders bevorzugte calciumhaltige Bleilegierungen sind in diesem Zusammenhang Pb-Ca-La-Y, Pb-Ca-Ce-Y oder Pb-Ca-La-Ce-Y. Hinsichtlich der quantitativen Zusammensetzung sind insbesondere die Legierungen Pb-Ca0,07-La0,01-Y0,01, Pb-Ca0,07-Ce0,01-Y0,01 oder Pb-Ca0,07-La0,01-Ce0,005-Y0,005 bevorzugt.

Die calciumhaltige erfindungsgemäße Bleilegierung kann gemäß einem bevorzugten Merkmal der Erfindung weitere Legierungskomponenten aufweisen. Diese Legierungskomponenten sind ausgewählt aus der Gruppe Sn, Ag, Ba, Bi und Al. Die Legierungskomponenten dienen der Verbesserung verschiedener Eigenschaften der Bleilegierung. Insbesondere dienen sie dazu, die Bleilegierung für verschiedene Verarbeitungsverfahren zu optimieren. Solche Verarbeitungsverfahren umfassen im Bereich der Gießtechnik insbesondere Fallguss, Druckguss, kontinuierlichen Guss (ConCast) und Walz-/Stanztechniken.

In Kombination mit der erfindungsgemäßen calciumhaltigen Bleilegierung haben die vorgenannten optionalen Legierungskomponenten folgende technische Effekte:
Zinn (Sn) verlangsamt die Überalterung des Gefüges, erhöht die Leitfähigkeit der Korrosionsschichten und trägt somit zur Erhöhung der Stromaufnahmefähigkeit, Zyklenfestigkeit und die Erholungsfähigkeit der Batterien nach Tiefentladungen bei. Der Gewichtsanteil von Sn in der Legierung liegt vorzugsweise bei maximal 2,0 Gew.-%. Besonders bevorzugt beträgt er von 0,2 Gew.-% bis 2,0 Gew.-%.

Silber (Ag) verbessert die Korrosionsbeständigkeit und erhöht die Kriechfestigkeit der Bleilegierungen bei hohen Temperaturen. Der Gewichtsanteil von Ag in der Legierung liegt vorzugsweise bei maximal 0,035 Gew.-%. Besonders bevorzugt beträgt er von 0,008 Gew.-% bis 0,035 Gew.-%.

Barium (Ba) erhöht (selbst in vergleichsweise kleinen Mengen) die mechanische Festigkeit der Bleilegierungen. Der Gewichtsanteil von Ba in der Legierung liegt vorzugsweise bei maximal 0,07 Gew.-%. Besonders bevorzugt beträgt er von 0,03 Gew.-% bis 0,07 Gew.-%.

Bismut (Bi) trägt zur Gitterhärte bei. Der Gewichtsanteil von Bi in der Legierung liegt vorzugsweise bei maximal 0,03 Gew.-%. Besonders bevorzugt beträgt er von 0,005 Gew.-% bis 0,03 Gew.-%.

Aluminium (Al) schützt die Schmelzen im Herstellungsprozess der Bleilegierung gegen Luftoxidation. Vorzugsweise wird Al nur zusammen mit Ca oder Ba verwendet, da calcium- und/oder bariumhaltige Schmelzen im Besonderen zu Oxidation an der Luft neigen. Der Gewichtsanteil von Al in der Legierung liegt vorzugsweise bei maximal 0,012 Gew.-%. Besonders bevorzugt beträgt er von 0,005 Gew.-% bis 0,012 Gew.-%.

Ferner betrifft die Erfindung die Verwendung der erfindungsgemäßen Bleilegierungen als Material für eine Elektrodenstruktur für Blei-Säure-Akkumulatoren. Bevorzugt ist die Verwendung als Material für ein Elektrodengitter. Durch die erfindungsgemäße Verwendung der Bleilegierungen kann ein für den Einsatz in einem Blei-Säure-Akkumulator geeignetes Elektrodengerüst bereitgestellt werden, dessen Lebensdauer zumindest durch eine Verringerung des Wachstumseffekts des Elektrodengerüsts im bestimmungsgemäßen Betrieb verlängert ist.

Darüber hinaus sind die erfindungsgemäßen Bleilegierungen in verschiedenen Verarbeitungsprozessen, insbesondere im Bereich der Gusstechnik, verwendbar. Vorzugsweise ist eine Verwendung der erfindungsgemäßen Bleilegierungen als Ausgangsmaterial in einem Herstellungsverfahren für Elektrodengerüste, insbesondere Elektrodengitter, vorgesehen. Die calciumhaltigen Legierungen können mit konventionellen Gießanlagen verarbeitet werden, d.h. mit Fallguss und Druckguss Gitterherstellverfahren.

Die Bleilegierung ist durch die Wahl ihrer Komponenten vergleichsweise gut verarbeitbar, wodurch sie im Unterschied zu aus dem Stand der Technik bekannten Legierungen in verschiedensten Verfahren eingesetzt werden kann.

Darüber hinaus betrifft die Erfindung eine Elektrode für einen Blei-Säure-Akkumulator mit einem Elektrodengerüst, welches wenigstens teilweise aus wenigstens einer der erfindungsgemäßen Bleilegierungen gebildet ist. Gemäß einer bevorzugten Ausgestaltung der Erfindung ist das Elektrodengerüst vollständig aus nur einer der erfindungsgemäßen Bleilegierungen gebildet. Durch den Einsatz der erfindungsgemäßen Bleilegierungen wird die Lebensdauer der Elektrode und des Akkumulators insgesamt verbessert.

Gemäß einer bevorzugten Weiterbildung der Erfindung weist die Elektrode eine pastöse aktive Masse auf, welche von dem Elektrodengerüst aufgenommen ist. Es hat sich gezeigt, dass die erfindungsgemäßen Bleilegierungen besonders gut mit der aktiven Elektrodenmasse wechselwirken. Die Adhäsion der aktiven Elektrodenmasse am Elektrodengerüst wird somit verstärkt, wodurch die Elektrode insgesamt eine verbesserte mechanische Stabilität und ein verbessertes Lade-Entladeverhalten aufweist.

Die Erfindung betrifft ferner einen Blei-Säure-Akkumulator aufweisend eine erfindungsgemäße Elektrode. Durch den Einsatz einer Elektrode mit einem Elektrodengerüst aus einer erfindungsgemäßen Bleilegierung wird die Lebensdauer des Akkumulators durch die Verringerung von Elektrodenwachstum verbessert. Es wird folglich ein Blei-Säure-Akkumulator mit vergleichsweise langer Lebensdauer bereitgestellt. Vorzugsweise ist der Blei-Säure-Akkumulator ein VRLA-Akkumulator (ventilgeregelter Blei-Säure-Akkumulator). Hierdurch ist der Akkumulator insbesondere zum Einsatz in Traktionsbatterien und stationären Anlagen geeignet.

Nachfolgend werden Beispiele für bevorzugte Legierungszusammensetzungen gegeben:

### Ausführungsbeispiel 1

| | |
|---|---|
| 0,04 Gew.-% - 0,08 Gew.-% | Ca |
| 0,8 Gew.-% - 1,8 Gew.-% | Sn |
| 0,01 Gew.-% - 0,025 Gew.-% | Ag |
| 0,008 Gew.-% - 0,020 Gew.-% | Y |
| 0,005 Gew.-% - 0,014 Gew.-% | Al |
| | |
| Rest | Pb. |

### Ausführungsbeispiel 2

| | |
|---|---|
| 0,04 Gew.-% - 0,08 Gew.-% | Ca |
| 0,8 Gew.-% - 1,8 Gew.-% | Sn |
| 0,01 Gew.-% - 0,025 Gew.-% | Ag |
| 0,008 Gew.-% - 0,020 Gew.-% | Y |
| 0,005 Gew.-% - 0,014 Gew.-% | Al |
| 0,008 Gew.-% - 0,020 Gew.-% | La |
| | |
| Rest | Pb. |

### Ausführungsbeispiel 3

| | |
|---|---|
| 0,04 Gew.-% - 0,06 Gew.-% | Ca |
| 0,8 Gew.-% - 1,8 Gew.-% | Sn |
| 0,01 Gew.-% - 0,025 Gew.-% | Ag |
| 0,01 Gew.-% - 0,02 Gew.-% | Y |
| 0,005 Gew.-% - 0,014 Gew.-% | Al |
| 0,008 Gew.-% - 0,020 Gew.-% | La |
| 0,02 Gew.-% - 0,04 Gew.-% | Ba |
| | |
| Rest | Pb. |

### Ausführungsbeispiel 4

| | |
|---|---|
| 0,04 Gew.-% - 0,08 Gew.-% | Ca |
| 0,8 Gew.-% - 1,8 Gew.-% | Sn |
| 0,01 Gew.-% - 0,025 Gew.-% | Ag |
| 0,005 Gew.-% - 0,015 Gew.-% | Y |
| 0,005 Gew.-% - 0,014 Gew.-% | Al |
| 0,008 Gew.-% - 0,016 Gew.-% | La |
| 0,01 Gew.-% - 0,02 Gew.-% | Ce |
| | |
| Rest | Pb. |

## Patentansprüche

1. Bleilegierung, insbesondere Elektrodengitterlegierung, aufweisend Blei, 0,04 Gew.-% - 0,08 Gew.-% Calcium und 0,003 Gew.-% - 0,025 Gew.-% wenigstens eines Seltenerdmetalls, **gekennzeichnet durch** Yttrium als Seltenerdmetall.

2. Bleilegierung gemäß Anspruch 1, bestehend aus:
| | |
|---|---|
| 0,003 Gew.-% - 0,025 Gew.-% | Y |
| 0,04 Gew.-% - 0,08 Gew.-% | Ca |
| 0,0 Gew.-% - 2,0 Gew.-% | Sn |
| 0,0 Gew.-% - 0,035 Gew.-% | Ag |
| 0,0 Gew.-% - 0,07 Gew.-% | Ba |
| 0,0 Gew.-% - 0,03 Gew.-% | Bi |
| 0,0 Gew.-% - 0,012 Gew.-% | Al |
| Rest | Pb; |
wobei die Summe aller Gewichtsanteile der Legierungskomponenten in der Bleilegierung 100 Gew.-% beträgt.

3. Bleilegierung gemäß einem der Ansprüche 1 oder 2, **gekennzeichnet durch** wenigstens ein weiteres Seltenerdmetall, wobei das weitere Seltenerdmetall ein Lanthanoid, insbesondere La, Ce oder ein LaCe-Mischmetall, ist.

4. Bleilegierung gemäß einem der Ansprüche 1 bis 3, bestehend aus:
| | |
|---|---|
| 0,003 Gew.-% - 0,025 Gew.-% | Y |
| 0,003 Gew.-% - 0,025 Gew.-% | wenigstens ein Lanthanoid |
| 0,04 Gew.-% - 0,08 Gew.-% | Ca |
| 0,8 Gew.-% - 1,8 Gew.-% | Sn |
| 0,0 Gew.-% - 0,035 Gew.-% | Ag |
| 0,0 Gew.-% - 0,07 Gew.-% | Ba |
| 0,0 Gew.-% - 0,03 Gew.-% | Bi |
| 0,0 Gew.-% - 0.012 Gew.-% | Al |
| Rest | Pb; |
wobei die Summe aller Gewichtsanteile der Legierungskomponenten in der Bleilegierung 100 Gew.-% beträgt.

5. Bleilegierung gemäß einem der Ansprüche 1 bis 4, bestehend aus:
| | |
|---|---|
| 0,003 Gew.-% - 0,025 Gew.-% | Y |
| 0,003 Gew.-% - 0,025 Gew.-% | wenigstens ein Lanthanoid |
| 0,04 Gew.-% - 0,08 Gew.-% | Ca |
| 0,8 Gew.-% - 1,8 Gew.-% | Sn |
| 0,01 Gew.-% - 0,02 Gew.-% | Ag |
| 0,0 Gew.-% - 0,07 Gew.-% | Ba |
| 0,0 Gew.-% - 0,03 Gew.-% | Bi |
| 0,05 Gew.-% - 0.012 Gew.-% | Al |
| Rest | Pb; |
wobei die Summe aller Gewichtsanteile der Legierungskomponenten in der Bleilegierung 100 Gew.-% beträgt.

6. Verwendung einer Bleilegierung gemäß einem der Ansprüche 1 bis 5 als Material für ein Elektrodengerüst, insbesondere in Form eines Elektrodengitters, für Blei-Säure-Akkumulatoren.

7. Verwendung einer Bleilegierung gemäß einem der Ansprüche 1 bis 5, in einem Fallgussverfahren oder Druckgussverfahren zur Herstellung eines Elektrodengerüsts, insbesondere eines Elektrodengitters, für Blei-Säure-Akkumulatoren.

8. Elektrode für einen Blei-Säure-Akkumulator, mit einem Elektrodengerüst, insbesondere einem Elektrodengitter, welches wenigstens teilweise aus wenigstens einer Bleilegierung gemäß einem der Ansprüche 1 bis 5 gebildet ist.

9. Elektrode gemäß Anspruch 8, **gekennzeichnet durch** eine pastöse aktive Elektrodenmasse, welche von dem Elektrodengerüst aufgenommen ist.

10. Blei-Säure-Akkumulator, insbesondere VRLA-Akkumulator, aufweisend eine Elektrode gemäß einem der Ansprüche 8 oder 9.
